# EUROPÄISCHE PATENTSCHRIFT

(11) **EP 3 195 435 B1**
(45) Veröffentlichungstag und Bekanntmachung des Hinweises auf die Patenterteilung: **06.07.2022**
(21) Anmeldenummer: 15753044.5
(22) Anmeldetag: 20.08.2015
(51) Int. Cl.: H02H 1/00, H01H 79/00, H02H 1/06, H02H 3/02

(54) **ANORDNUNG ZUM ANLAGEN- UND PERSONENSCHUTZ IN MEHRPHASIGEN NIEDERSPANNUNGS-VERSORGUNGSEINRICHTUNGEN**
ASSEMBLY FOR INSTALLATION PROTECTION AND PROTECTION OF PERSONS IN MULTI-PHASE LOW-VOLTAGE SUPPLY DEVICES
DISPOSITIF DE PROTECTION D'INSTALLATIONS ET DE PERSONNES DANS DES MOYENS D'ALIMENTATION BASSE TENSION POLYPHASÉS

(30) Priorität: 18.09.2014 DE 102014013899; 05.11.2014 DE 102014016738
(43) Veröffentlichungstag der Anmeldung: 26.07.2017
(73) Patentinhaber: DEHN SE, 92318 Neumarkt i.d. OPf. (DE)
(72) Erfinder: KIENLEIN, Reinhold, 92318 Neumarkt (DE); HÖLLERL, Markus, 90518 Altdorf (DE); DIETWEGER, Stefan, 90408 Nürnberg (DE); SCHUSTER, Stefanie, 92364 Deining (DE)
(74) Vertreter: Prinz & Partner mbB
(86) Internationale Anmeldenummer: PCT/EP2015/069149
(87) Internationale Veröffentlichungsnummer: WO 2016/041730

(56) Entgegenhaltungen:
- EP-A2- 1 876 627
- WO-A1-99/26328
- US-B1- 6 657 150

## Beschreibung

Die Erfindung betrifft eine Anordnung zum Anlagen- und Personenschutz in mehrphasigen Niederspannungs-Versorgungseinrichtungen, welche von einer Störlichtbogen-Erfassungseinheit auslösbar ist und Kurzschließer aufweist, welche zwischen den Sammelschienen der Versorgungseinrichtung einen Kurzschluss herstellen, wobei die Kurzschließer jeweils durch eine elektronische Baugruppe mit Schaltelement angesteuert und aktiviert werden und hierfür die Störlichtbogen-Erfassungseinheit mit dem Eingang der elektronischen Baugruppe in Verbindung steht, gemäß Oberbegriff des Anspruchs 1.

Systeme zum Kurzschließen von Niederspannungsanlagen zur Reduzierung der Schäden infolge von Störlichtbögen gehören zum Stand der Technik. Bei derartigen Systemen stehen der Anlagenschutz, die Anlagenverfügbarkeit sowie kurze Zeiten zur Wiederinbetriebnahme im Vordergrund. Neben dem Anlagenschutz übernehmen bekannte Systeme auch Funktionen bezüglich des Personenschutzes im Normalbetrieb. Die Funktion bekannter Systeme ist üblicherweise direkt oder indirekt an die Netzspannung der Anlagen gekoppelt. Die Zeit bis zur Betriebsbereitschaft der Systeme ist teilweise recht lang.

Bekannte Kurzschließereinrichtungen werden in vielen Fällen von Lichtbogen-Detektionssystemen angesteuert, welche Geräte zur Anlagentrennung aktivieren. Die Kurzschließereinrichtungen dienen dem raschen Verlöschen des Lichtbogens, da übliche Schalter zu große Verzugszeiten von mehreren zehn bis einhundert Millisekunden besitzen.

Bekannt sind auch Störlichtbogensysteme zur Ansteuerung von Leistungsschaltern. Durch die Ergänzung mit einem Kurzschließer können derartige Systeme auch Anlagen mit relativ hohen Kurzschlussströmen eingesetzt werden.

Bei Störlichtbogen-Schutzsystemen der DEHN + SÖHNE GmbH + Co. KG, Neumarkt / Deutschland kann der Lichtbogen entweder optisch mit Punktsensoren oder mit Lichtwellenleiter-Liniensensoren detektiert werden. Zusätzlich ist eine Stromerfassung möglich. Nach Ansteuerung durch die Störlichtbogen-Erfassungseinheit stellt der vorhandene Kurzschließer in kurzer Zeit eine metallische Verbindung zwischen den vorhandenen Sammelschienen dar. Der Kurzschlussstrom wird dann durch den Leistungsschalter der Niederspannungsanlage abgeschaltet. Die erreichte signifikante Verkürzung der Lichtbogenzeit dient dem Anlagenschutz. Damit ist die Einwirkenergie reduziert und eine schnelle Wiederinbetriebnahme der betreffenden Niederspannungsanlage möglich. Der prospektive Kurzschlussstrom liegt bei dem vorbekannten Störlichtbogen-Schutzsystem im Bereich zwischen 5 und 65 kA mit einer maximalen Kurzschlussdauer von ca. 50 ms bei Höchstbelastung.

Eingesetzte Kurzschließer, z.B. nach DE 10 2005 048 003 B4 weisen zwei sich gegenüberliegende Kontaktelektroden mit Mitteln zum Stromzuführung auf, wobei die Elektroden an einen Stromkreis mit Anschlüssen von unterschiedlichem Potential kontaktierbar sind. Weiterhin stehen die Kontaktelektroden unter mechanischer Vorspannung und können im Kurzschlussfall federkraftunterstützt eine Relativbewegung zueinander ausführen.

Die Lösung nach DE 10 2005 048 003 B4 umfasst weiterhin ein sogenanntes Opferelement als Abstandshalter zwischen den Kontaktelektroden sowie eine elektrische Verbindung zwischen dem Opferelement und dem Schaltelement einerseits und einer der Kontaktelektroden andererseits, um eine stromflussbedingte thermische Zerstörung des Opferelements gezielt herbeizuführen. Gemäß einer dortigen Ausführungsform kann das Opferelement ein dünnwandiger Hohlzylinder mit einem Verhältnis zwischen Durchmesser und Wandstärke des Hohlzylinders größer 10:1, bestehend aus einem hochschmelzenden metallischen Material, sein.

Bei der Lösung gemäß DE 10 2013 001 612 A1 besteht die Aufgabe, eine Anordnung zum Anlagen- und Personenschutz anzugeben, die ohne zusätzliche Hilfsenergie funktionsfähig und in der Lage ist, bei der Entstehung eines Störlichtbogens, z.B. aus der Überlastung einer bei Arbeiten unter Spannung aufgebrachten Drahtbrücke, rechtzeitig zu reagieren.

Zur Auslösung des dort eingesetzten Schaltelements wird die benötigte Energie aus einer Stromquelle gewonnen, welche aus der Spannung des Lichtbogens selbst versorgt wird. Die elektronische Stromquelle wird über einen Bipolartransistor geregelt. Der Bipolartransistor weist eine isolierte Gate-Elektrode auf, wobei dessen Kollektor und Emitter zwischen zwei Phasen L1 und L2 geschalten sind. Der Bipolartransistor steht mit einem Schalttransistor in Verbindung, weicher bei Auftreten eines Störlichtbogens leitfähig wird und über seinen Ausgang das Schaltelement betätigt. Dabei wirkt der Bipolartransistor mit isolierter Gate-Elektrode in Verbindung mit dem Schalttransistor sowie der Störlichtbogenspannung als interne Stromquelle.

US 6 657 150 B1 offenbart eine Schutzanordnung in ein- und/oder mehr-phasigen Versorgungseinrichtungen, wobei eine Störlichtbogenerfassungseinheit mindestens einen Kurzschließer auslöst, so dass der Kurzschließer zwischen den Sammelschienen der Versorgungseinrichtung einen Kurzschluss herstellt, wenn ein Störlichtbogen erkannt wird.

Aus dem Vorgenannten ist es Aufgabe der Erfindung, eine weiterentwickelte Anordnung zum Anlagen- und Personenschutz in mehrphasigen Niederspannungs-Versorgungseinrichtungen, welche von einer Störlichtbogen-Erfassungseinheit auslösbar ist und Kurzschließer aufweist, anzugeben, wobei eine Erhöhung der Kurzschlussstromfestigkeit und ein sicherer Betrieb der Anordnung erfolgen soll. Weiterhin ist die Möglichkeit zu schaffen, in einfacher Weise Isolationsprüfungen vor Inbetriebnahme oder nach Störfällen durchführen zu können, und zwar ohne dass Eingriffe in die Anordnung verbunden mit Aufwand, wie dem Lösen von mechanischen Verbindungen, insbesondere Schraubverbindungen oder dergleichen, erforderlich werden.

Die Lösung der Aufgabe der Erfindung erfolgt durch eine Anordnung gemäß der Merkmalskombination nach Patentanspruch 1, wobei die Unteransprüche mindestens zweckmäßige Ausgestaltungen und Weiterbildungen darstellen.

Es wird demnach von einer Anordnung zum Anlagen- und Personenschutz in mehrphasigen Niederspannungs-Versorgungseinrichtungen, d.h. Einrichtungen mit einer Nennspannung von 230 / 400 V ausgegangen, wobei eine Störlichtbogen-Erfassungseinheit vorhanden ist und diese mit Kurzschließern in Verbindung stehen, welche zwischen den Sammelschienen L1, L2, L3 der Versorgungseinrichtung einen Kurzschluss herstellen, wobei die Kurzschließer jeweils durch eine elektronische Baugruppe mit Schaltelement angesteuert und aktiviert werden und hierfür die Störlichtbogen-Erfassungseinheit mit dem Eingang der elektronischen Baugruppe in Verbindung steht. Die Störlichtbogen-Erfassungseinheit kann die relevanten Lichtbögen optisch z.B. mit Punktsensoren oder Lichtwellenleiter-Liniensensoren detektieren.

Zur Erhöhung der Kurzschlussstromfestigkeit, z.B. auf einen Wert von ≥120 kA, ist eine Parallelschaltung von Kurzschließern vorgesehen. Zur sicheren Ansteuerung der parallel geschalteten Kurzschließer ist eine Energiespeichereinheit zwischen den Phasen der Niederspannungs-Versorgungseinrichtung angeschlossen, welche auf einen Regler zur Bereitstellung der Ansteuerspannung für das Schaltelement führt.

Hierdurch kann auch im Fall eines zeitlich ungleichen Ansprechens einer der parallel geschalteten Kurzschließer mit resultierendem Verlust der Versorgungsspannung das Schaltelement für den langsameren der Kurzschließer sicher aktiviert werden.

Das Schaltelement weist einen oder zwei antiparallel geschaltete Thyristoren auf.

Die Energiespeichereinheit besitzt einen oder mehrere in Reihe geschaltete Kondensatoren, insbesondere solche Kondensatoren, die eine hohe Speicherspannung besitzen.

Der oder die Kondensatoren der Energiespeichereinheit sind über eine oder mehrere Dioden an den jeweiligen Phasen der Niederspannungs-Versorgungseinrichtung angeschlossen.

Der erwähnte Regler kann bevorzugt als Linearregler ausgebildet werden und stellt die Betriebsgleichspannung für die elektronische Baugruppe bereit.

Bei einer Ausführungsform der Erfindung wird aus der Speicherspannung, die an den Kondensatoren anliegt, eine 14 V-Betriebsgleichspannung mittels des Linearreglers erzeugt, um auch bei bereits kurzgeschlossener Versorgungsspannung durch einen der Kurzschließer ein sicheres Auslösen des weiteren Kurzschließers über das Schaltelement zu bewirken.

Bevorzugt verfügt die Niederspannungs-Versorgungseinrichtung über eine Doppeleinspeisung mit einer im Wesentlichen gleichen Transformatorenleistung, wobei die parallel geschalteten Kurzschließer nahe an den Einspeisestellen hinter vorhandenen Leistungsschaltern befindlich sind.

Zur gleichmäßigen Stromaufteilung zwischen den parallel geschalteten Kurzschließern ist eine Mindestimpedanz vorhanden. Als Mindestimpedanz kann ein Schaltschrankfeld genutzt werden.

Das mindestens eine Schaltelement und/oder die gesamte elektronische Baugruppe wird durch ein spannungsbegrenzendes Bauelement, insbesondere einen Varistor oder eine Varistorgruppe, vor Überspannungen geschützt.

Zur Durchführung von Isolationsprüfungen vor erster Inbetriebnahme oder nach Störfällen ist das spannungsbegrenzende Bauelement und die diesbezügliche Verbindung zwischen dem Schaltelement der elektronischen Baugruppe und dem jeweiligen Kurzschließer durch einen geräteseitig von außen zugänglichen Brückenstecker, insbesondere in Bügelform, trennbar.

Der Brückenstecker weist eine isolierte Grifffläche zum werkzeugfreien Ziehen auf.

Die Erfindung soll nachstehend anhand von Ausführungsbeispielen sowie unter Zuhilfenahme von Figuren näher erläutert werden.

Hierbei zeigen:
- Fig. 1: eine Prinzipschaltung einer Paralleleinspeisung von Niederspannungs-Transformatoren dreiphasiger Bauart mit der Parallelschaltung von Kurzschließereinheiten KSE, die jeweils von einem Lichtbogenerfassungssystem über Lichtwellenleiter-Umsetzer ansteuerbar sind;
- Fig. 2: ein Blockschaltbild der erfindungsgemäßen Energiespeichereinheit und
- Fig. 3: ein Blockschaltbild der erfindungsgemäßen Anordnung mit elektronischer Baugruppe STE, dem eigentlichen mechanischen Kurzschließer KSP, den Anschlüssen an den Phasen LX und LY, wobei die elektronische Baugruppe STE einen Lichtwellenleitereingang LWL aufweist, der Bestandteil der Störlichtbogen-Erfassungseinheit ist.

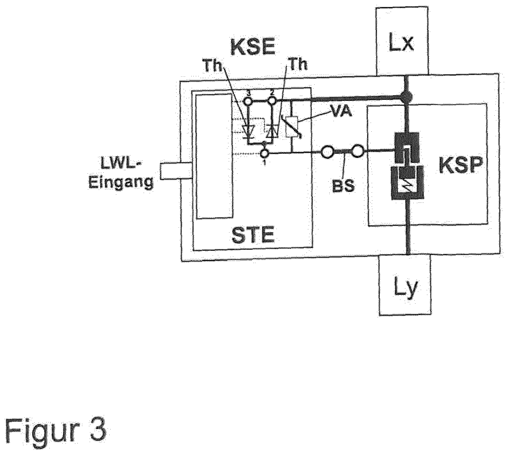

Weiterhin zeigt die Fig. 3 antiparallel geschaltete Thyristoren, die das Schaltelement zum Ansteuern und Aktivieren des Kurzschließers KSP darstellen und einen erfindungsgemäßen, geräteaußenseitig zugänglichen Brückenstecker.

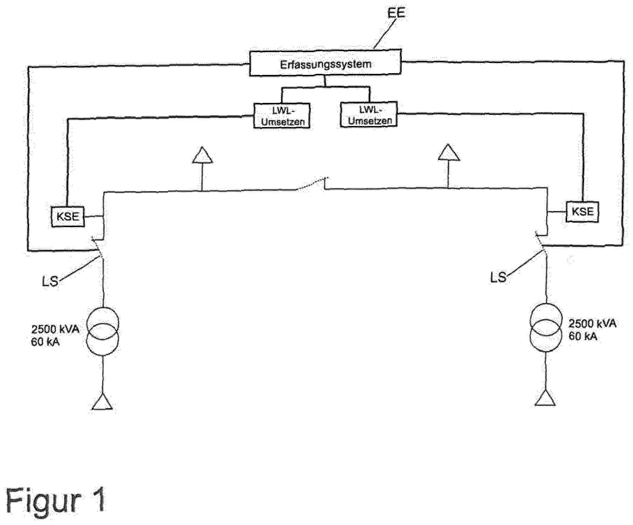

Wie in der Fig. 1 dargestellt, besteht die Möglichkeit, Kurzschließereinheiten KSE parallel zu schalten, um die Kurzschlussstromfestigkeit von z.B. 65 kA auf ≥120 kA zu erhöhen.

Hier wird gemäß Fig. 1 von Anlagen mit einer Doppeleinspeisung und gleicher Transformatorenleistung ausgegangen.

Die parallel geschalteten Kurzschließer KSE werden jeweils nahe den Einspeisestellen direkt nach dem jeweiligen Leistungsschalter LS montiert. Eine gleichmäßige Stromaufteilung wird dadurch erreicht, indem eine Mindestimpedanz zwischen den beiden Kurzschließern KSE vorhanden ist. Diese Mindestimpedanz kann durch mindestens ein Schaltschrankfeld oder dergleichen gebildet werden.

Es sollen grundsätzlich die eingesetzten Kurzschließer KSE mit etwa ± 50 µs gleich schnell ansprechen, es besteht jedoch die Gefahr, dass der schneller ansprechende Kurzschließer dem langsameren die Versorgungsspannung kurzschließt, bevor der langsamere Kurzschließer den eingesetzten Thyristor als Schaltelement bleibend zünden konnte.

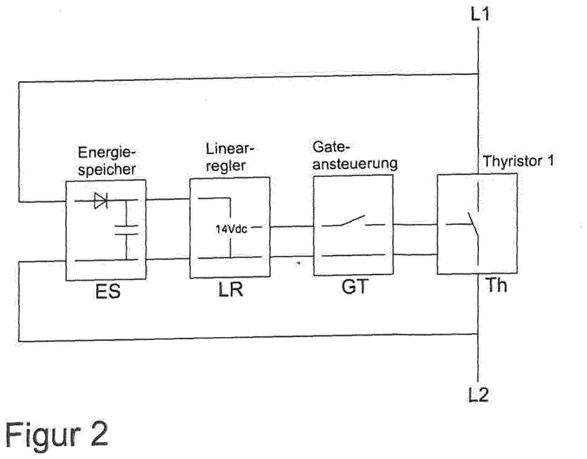

Diesbezüglich wird auf den erfindungsgemäßen Ansatz, wie in der Fig. 2 dargestellt, zurückgegriffen.

So ist eine Energiespeichereinheit an den Phasen L1 und L2 angeschlossen, wobei der Energiespeicher aus einer Reihenschaltung einer Diode und mindestens einem Kondensator besteht. Ausgangsseitig steht der Energiespeicher ES mit einem Linearregler LR in Verbindung, der die notwendige Betriebsgleichspannung zum Aktivieren des Thyristors Th bereitstellt respektive für dessen Gate-Ansteuerung GT sorgt.

Die Speicherschaltung wird so ausgeführt, dass sie innerhalb von wenigen Mikrosekunden geladen ist und einen ausreichenden Strom für den Eigenverbrauch über die relevante Zeit liefern kann. Die interne Betriebsgleichspannung von ca. 14 V wird aus dem Energiespeicher ES, umfassend mindestens einen Kondensator mit hoher Speicherspannung von etwa 550 V gespeist.

Die diesbezügliche Elektronikbaugruppe weist zwei Speicherschaltungen für die Ansteuerung antiparallel geschalteter Thyristoren Th gemäß Fig. 3 auf. Je nach aktueller Polarität der Phasen-Phasen-Spannung wird dann der in Flussrichtung liegende Thyristor (siehe Fig. 3) angesteuert.

Die beschriebene Anordnung zum Anlagen- und Personenschutz in mehrphasigen Niederspannungs-Versorgungsanlagen muss vor der Inbetriebnahme oder nach Störfällen einer Isolationsprüfung unterzogen werden. Diesbezüglich müssen spannungsbegrenzende Bauelemente entfernt oder elektrisch getrennt werden.

Bei Kurzschließeinheiten KSE gemäß Fig. 3 werden die elektronischen Bauteile durch ein spannungsbegrenzendes Element, insbesondere einen Varistor VA vor Überspannungen geschützt. Dies ist insbesondere für die Thyristoren Th nach Fig. 3 erforderlich, da diese direkt an der Netzspannung liegen.

Gemäß der vorgestellten Lösung wird die erforderliche Trennung durch einen Brückenstecker BS gelöst. Der Brückenstecker ist ausgelegt, um 10 kA für etwa 0,5 ms zu tragen. Der Brückenstecker BS kann von Hand, ohne Hilfe von Werkzeug, durch einfaches Ziehen gelöst werden. Insofern ist der Brückenstecker von außen an der erfindungsgemäßen Anordnung zugänglich und weist z.B. die Form eines U auf. Durch die schnelle und einfache Lösbarkeit des Brückensteckers kann die Anlagenstillstandszeit bei der Inbetriebnahme bzw. bei der Wiederinbetriebnahme verkürzt werden.

Darüber hinaus kann der Brückenstecker BS auch wie ein Ein-/Ausschalter benutzt werden. Der Lichtwellenleitereingang darf nämlich, um Fehlauslösungen zu vermeiden, nur im spannungsfreien Zustand getrennt werden. Durch vorheriges Ziehen des Brückensteckers BS kann der Kurzschließer KSP in einen deaktivierten Zustand versetzt werden und somit bedenkenlos, ohne Verbindung zur Störlichtbogen-Erfassungseinheit an Spannung liegen.

## Patentansprüche

1. Anordnung zum Anlagen- und Personenschutz für mehrphasigen Niederspannungs-Versorgungseinrichtungen, welche eine Störlichtbogen-Erfassungseinheit (EE) und Kurzschließer (KSP) aufweist, wobei die Kurzschließer ausgebildet sind welche zwischen den Sammelschienen der Niederspannungs-Versorgungseinrichtung einen Kurzschluss herzustellen, wobei die Kurzschließer (KSP) jeweils durch eine elektronische Baugruppe (STE) der Anordnung mit Schaltelement (Th) angesteuert und aktiviert werden und hierfür die Störlichtbogen-Erfassungseinheit (EE) mit dem Eingang der elektronischen Baugruppe (STE) in Verbindung steht, sowie zur Erhöhung der Kurzschlussstromfestigkeit eine Parallelschaltung von Kurzschließern (KSE / KSP) vorgesehen ist, **dadurch gekennzeichnet, dass** die Anordnung eine Energiespeichereinheit (ES) und einen Regler (LR) aufweist, wobei, wenn die Anordnung in einer Niederspannungs-Versorgungseinrichtung angeordnet ist, zur sicheren Ansteuerung der parallel geschalteten Kurzschließer (KSE / KSP) die Energiespeichereinheit (ES) zwischen den Phasen (L1; L2; L3) der Niederspannungs-Versorgungseinrichtung angeschlossen ist, wobei die Energiespeichereinheit (ES) auf den Regler (LR) zur Bereitstellung der Ansteuerspannung für das Schaltelement (Th) führt, so dass auch im Fall eines zeitlich ungleichen Ansprechens der parallel geschalteten Kurzschließer (KSE / KSP) mit resultierendem Verlust der Spannung zwischen den Phasen das Schaltelement (Th) für den langsameren der Kurzschließer (KSE / KSP) aktivierbar ist, wobei das Schaltelement einen Thyristor (Th) oder zwei antiparallel geschaltete Thyristoren (Th; Th) aufweist und die Energiespeichereinheit (ES) einen oder mehrere in Reihe geschaltete Kondensatoren enthält.

2. Anordnung nach Anspruch 1, **dadurch gekennzeichnet, dass**, wenn die Anordnung in einer Niederspannungs-Versorgungseinrichtung angeordnet ist, der oder die Kondensatoren über eine Diode an den jeweiligen Phasen (L1; L2) der Niederspannungs-Versorgungseinrichtung angeschlossen sind.

3. Anordnung nach einem der vorangegangenen Ansprüche,
**dadurch gekennzeichnet, dass**
der Regler als Linearregler (LR) ausgebildet und die Betriebsgleichspannung für die elektronische Baugruppe (GT; Th) bereitstellt.

4. Anordnung nach einem der vorangegangenen Ansprüche,
**dadurch gekennzeichnet, dass**
die Niederspannungs-Versorgungseinrichtung über eine Doppeleinspeisung mit im Wesentlichen gleicher Transformatorleistung verfügt, wobei, wenn die Anordnung in der Niederspannungs- Versorgungseinrichtung angeordnet ist, die parallel geschalteten Kurzschließer (KSE) nahe an den Einspeisestellen hinter vorhandenen Leistungsschaltern (LS) befindlich sind.

5. Anordnung nach Anspruch 4,
**dadurch gekennzeichnet, dass**
zur gleichmäßigen Stromaufteilung zwischen den parallel geschalteten Kurzschließern (KSE) eine Mindestimpedanz vorhanden ist.

6. Anordnung nach einem der vorangegangenen Ansprüche,
**dadurch gekennzeichnet, dass**
das mindestens ein Schaltelement (Th) und/oder die elektronische Baugruppe (STE) durch einen Varistor oder dergleichen spannungsbegrenzendes Bauelement (VA) vor Überspannungen geschützt ist.

7. Anordnung nach Anspruch 6,
**dadurch gekennzeichnet, dass**
zur Durchführung von Isolationsprüfungen vor Inbetriebnahme oder nach Störfällen das spannungsbegrenzende Bauelement (VA) und die diesbezügliche Verbindung zwischen dem Schaltelement (Th) der elektronischen Baugruppe (STE) und dem jeweiligen Kurzschließer (KSP) durch einen geräteseitig von außen zugänglichen Brückenstecker (BS) trennbar ist.

8. Anordnung nach Anspruch 7,
**dadurch gekennzeichnet, dass**
der Brückenstecker (BS) eine isolierte Grifffläche zum werkzeugfreien Ziehen aufweist.

## Claims

1. An arrangement for the protection of installations and persons for multiphase low-voltage supply devices, which includes an arc-fault detection unit (EE) and short-circuiters (KSP), the short-circuiters being configured to produce a short-circuit between the busbars of the low-voltage supply device, the short-circuiters (KSP) each being driven and activated by an electronic assembly (STE) of the arrangement with a switching element (Th), and the arc-fault detection unit (EE) being in connection with the input of the electronic assembly (STE) for this purpose, and a parallel connection of short-circuiters (KSE / KSP) being provided in order to increase the short-circuit current strength,
**characterized in that**
the arrangement includes an energy storage unit (ES) and a regulator (LR), wherein when the arrangement is arranged in a low-voltage supply device, the energy storage unit (ES) is connected between the phases (L1; L2; L3) of the low-voltage supply device for safe actuation of the parallel-connected short-circuiters (KSE / KSP), wherein the energy storage unit (ES) leads to the regulator (LR) for providing the control voltage for the switching element (Th), so that even in the case that the parallel-connected short-circuiters (KSE / KSP) respond unequally in terms of time with a resultant loss of voltage between the phases, the switching element (Th) can be activated for the slower one of the short-circuiters (KSE / KSP), the switching element having one thyristor (Th) or two thyristors (Th; Th) in antiparallel connection, and the energy storage unit (ES) containing one or more capacitors connected in series.

2. The arrangement according to claim 1,
**characterized in that**
when the arrangement is arranged in a low-voltage supply device, the capacitor or capacitors are connected to the respective phases (L1; L2) of the low-voltage supply device via a diode.

3. The arrangement according to either of the preceding claims, **characterized in that**
the regulator is in the form of a linear regulator (LR) and provides the DC operating voltage for the electronic assembly (GT; Th).

4. The arrangement according to any of the preceding claims, **characterized in that**
the low-voltage supply device has a double feed with substantially the same transformer capacity, wherein when the arrangement is arranged in the low-voltage supply device, the parallel-connected short-circuiters (KSE) are located close to the feed points behind existing circuit breakers (LS).

5. The arrangement according to claim 4,
**characterized in that**
a minimum impedance is provided for uniform current sharing between the parallel-connected short-circuiters (KSE).

6. The arrangement according to any of the preceding claims, **characterized in that**
the at least one switching element (Th) and/or the electronic assembly (STE) is protected against overvoltages by a varistor or similar voltage-limiting component (VA).

7. The arrangement according to claim 6,
**characterized in that**
for carrying out insulation tests before initial operation or after malfunctions, the voltage-limiting component (VA) and the associated connection between the switching element (Th) of the electronic assembly (STE) and the respective short-circuiter (KSP) can be separated by a jumper plug (BS) accessible from the outside on the device side.

8. The arrangement according to claim 7,
**characterized in that**
the jumper plug (BS) has an insulated gripping surface for pulling without a tool.

## Revendications

1. Agencement pour la protection d'installations et de personnes pour des dispositifs d'alimentation basse tension polyphasés, présentant une unité de détection d'arc électrique parasite (EE) et des court-circuiteurs (KSP), les court-circuiteurs étant réalisés de manière à établir un court-circuit entre les jeux de barres du dispositif d'alimentation basse tension, les court-circuiteurs (KSP) étant respectivement commandés et activés par un ensemble électronique (STE) de l'agencement avec un élément de commutation (Th), et l'unité de détection d'arc électrique parasite (EE) étant à cet effet reliée à l'entrée de l'ensemble électronique (STE), et un montage en parallèle de court-circuiteurs (KSE / KSP) étant prévu pour augmenter la résistance aux courants de court-circuit,
**caractérisé en ce que**
l'agencement présente une unité de stockage d'énergie (ES) et un régulateur (LR), l'unité de stockage d'énergie (ES) étant connectée entre les phases (L1 ; L2 ; L3) du dispositif d'alimentation basse tension pour une commande sûre des court-circuiteurs (KSE / KSP) montés en parallèle lorsque l'agencement est agencé dans un dispositif d'alimentation basse tension, l'unité de stockage d'énergie (ES) menant au régulateur (LR) pour fournir la tension de commande pour l'élément de commutation (Th), de sorte que même dans le cas d'une réaction inégale dans le temps des court-circuiteurs (KSE / KSP) montés en parallèle, avec une perte de tension résultante entre les phases, l'élément de commutation (Th) est apte à être activé pour le court-circuiteur plus lent parmi les court-circuiteurs (KSE / KSP), l'élément de commutation présentant un thyristor (Th) ou deux thyristors (Th ; Th) montés de manière antiparallèle, et l'unité de stockage d'énergie (ES) contenant un ou plusieurs condensateurs montés en série.

2. Agencement selon la revendication 1,
**caractérisé en ce que**
lorsque l'agencement est agencé dans un dispositif d'alimentation basse tension, le ou les condensateurs est/sont connecté(s) aux phases respectives (L1 ; L2) du dispositif d'alimentation basse tension par une diode.

3. Agencement selon l'une des revendications précédentes,
**caractérisé en ce que**
le régulateur est réalisé sous forme de régulateur linéaire (LR) et fournit la tension continue de fonctionnement pour l'ensemble électronique (GT ; Th).

4. Agencement selon l'une des revendications précédentes,
**caractérisé en ce que**
le dispositif d'alimentation basse tension présente une double alimentation avec une puissance de transformateur sensiblement identique, les court-circuiteurs (KSE) montés en parallèle, lorsque l'agencement est agencé dans le dispositif d'alimentation basse tension, se trouvant près des points d'alimentation derrière des commutateurs de puissance (LS) présents.

5. Agencement selon la revendication 4,
**caractérisé en ce que**
une impédance minimale est présente pour une répartition de courant uniforme entre les court-circuiteurs (KSE) montés en parallèle.

6. Agencement selon l'une des revendications précédentes,
**caractérisé en ce que**
ledit au moins un élément de commutation (Th) et/ou l'ensemble électronique (STE) est protégé contre des surtensions par une varistance ou un composant de limitation de tension (VA) similaire.

7. Agencement selon la revendication 6,
**caractérisé en ce que**
pour la réalisation de contrôles d'isolement avant la mise en fonctionnement ou après des défaillances, le composant de limitation de tension (VA) et la liaison associée entre l'élément de commutation (Th) de l'ensemble électronique (STE) et le court-circuiteur (KSP) respectif sont aptes à être coupés par un connecteur en pont (BS) accessible depuis l'extérieur du côté du dispositif.

8. Agencement selon la revendication 7,
**caractérisé en ce que**
le connecteur en pont (BS) présente une surface de préhension isolée pour tirer sans outil.
